# EUROPEAN PATENT SPECIFICATION

(11) **EP 2 655 823 B1**
(45) Date of publication and mention of the grant of the patent: **21.02.2018**
(21) Application number: 11851846.3
(22) Date of filing: 05.12.2011
(51) Int. Cl.: F01N 13/18, B60K 13/04, F01N 1/00

(54) **SUSPENSION SYSTEM FOR SOUND DAMPING DEVICE PERTAINING TO A VEHICLE**
AUFHÄNGUNGSSYSTEM FÜR EINE GERÄUSCHDÄMPFUNGSVORRICHTUNG EINES FAHRZEUGES
SUPPORT POUR UN DISPOSITIF D'INSONORISATION APPARTENANT À UN VÉHICULE

(30) Priority: 20.12.2010 SE 1051349
(43) Date of publication of application: 30.10.2013
(73) Proprietor: Scania CV AB, 151 87 Södertälje (SE)
(72) Inventor: GRANATH, Jon, SE-125 34 Älvsjö (SE); TALLBRINK, Joakim, SE-141 70 Segeltorp (SE); ALM, Jacob, SE-151 46 Södertälje (SE); SÖDERLUND, Daniel, SE-116 30 Stockholm (SE)
(74) Representative: Scania CV AB
(86) International application number: PCT/SE2011/051473
(87) International publication number: WO 2012/087224

(56) References cited:
- EP-A2- 2 165 875
- WO-A1-2006/003713
- WO-A1-2006/003713
- WO-A1-2006/033608
- WO-A1-2006/033608
- DE-A1-102008 017 024
- JP-A- 2002 138 826
- JP-A- 2008 050 977

## Description

### Field of the invention

The present invention relates to a suspension system for a sound damping device pertaining to a vehicle, and a vehicle provided with such a suspension system, according to the preambles of the independent claims.

### Background to the invention

A vehicle is provided with a sound damping device close to the exhaust pipe to damp the noise from the engine. Such a sound damping device may for example also comprise particle filters for exhaust post-treatment. Currently the sound damping device is usually fitted on the vehicle with no requirement for it to be easy to remove subsequently.

An example of a suspension system is described in WO 2006/033608, which relates to a device for mounting an oval container on a motor vehicle, where the device comprises a bracket designed to be mounted vertically on the frame of a vehicle. The bracket comprises an upper and lower arm. The device also comprises a mounting unit consisting of a reinforcing beam.

The particle filter in the sound damping device may need to be replaced, with consequent need to remove also the sound damping device. Various criteria have also to be taken into account, e.g. torsional and flexural stability, thermal expansion, tolerance chains, ease of fitting, effective use of space, ageing etc. The sound damping device on a bus is often fastened on the chassis underneath the vehicle, in a region where space is limited. There are also high vibration damping requirements with a view to good passenger comfort. The invention has identified a problem of today's suspension systems, inter alia with regard to the difficulty of removing the sound damping device.

The object of the present invention is therefore to propose a suspension system for a sound damping device which ensures that the sound damping device is easy to fit and remove, is torsionally and flexurally stable and also meets the criteria mentioned above.

### Summary of the invention

The above objects are achieved with the invention defined by the independent claims.

Preferred embodiments are defined by the dependent claims.

A first aspect of the invention relates to a suspension system for a sound damping device pertaining to a vehicle. The suspension system comprises at least two fitting apertures situated close to the upper side of the sound damping device, two arms and at least two insulators. The insulators are intended to be fitted in said fitting apertures and on said arms, and each insulator comprises a rod whereby it is intended to be fastened to the sound damping device. The suspension system also comprises a fitting device intended to be attached horizontally to the vehicle's chassis, comprising two members intended to be situated opposite and parallel to one another, which fitting device is intended to accommodate the arms, the insulators fastened to them and the sound damping device fastened to the insulators. The arms are intended to be parallel and be horizontally attached detachably close to the members.

The suspension system makes it possible for the matching requirements at interfaces to be set low, thereby saving manufacturing costs. The system also makes effective use of space and is easy to fit and remove. It also leads to good vibration damping and caters for thermal expansion and fitting tolerance chains.

A further advantage of the suspension system is that it is situated above the sound damping device and will therefore not be fouled by slush, mud etc. which may splash up from the ground.

A second aspect of the invention relates to a vehicle provided with a suspension system.

### Brief description of drawings

- Figure 1: is an exploded view of a suspension system for a sound damping device pertaining to a vehicle,
- Figure 2: is a perspective view of an arm which forms part of the suspension system,
- Figure 3: is a perspective view of an insulator which forms part of the suspension system,
- Figure 4: is a view from above of the arm fitted to the fitting device,
- Figure 5: is a section along A-A in Figure 4,
- Figure 6: is a perspective view of the suspension system pre-fitted to the sound damping device,
- Figure 7: is a perspective view of the suspension system and the sound damping device fitted to a vehicle, and
- Figure 8: depicts the suspension system and the sound damping device as seen from above when fitted to a vehicle.

### Detailed description of preferred embodiments of the invention

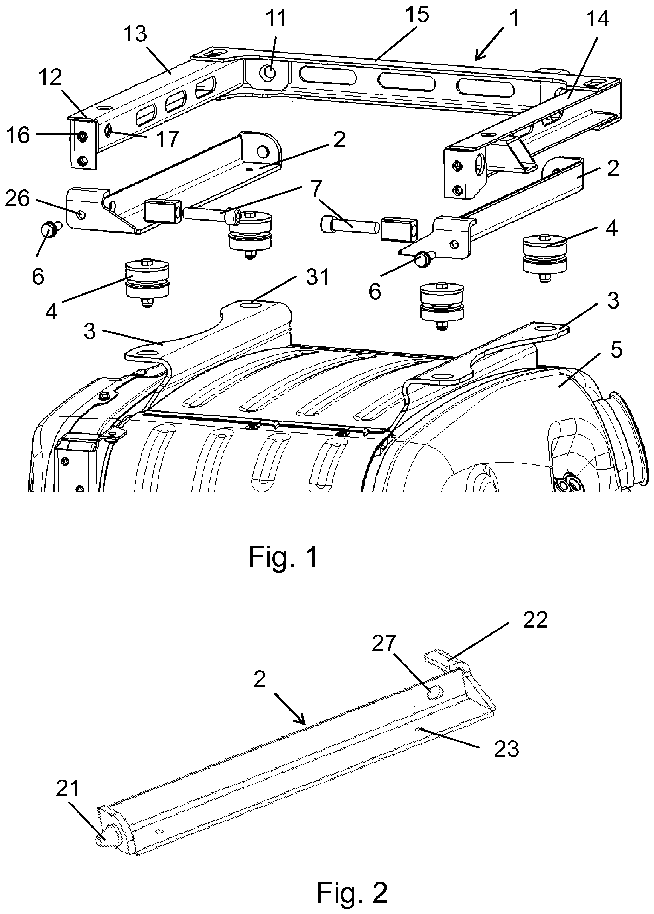

Figure 1 is an exploded view of a suspension system for a sound damping device 5 pertaining to a vehicle. The suspension system comprises at least two fitting apertures 31 situated close to the upper side of the sound damping device, two arms 2 and at least two insulators 4. The insulators are intended to be fitted in said fitting apertures 31 and on said arms 2, each insulator comprises a rod 43, and the insulators are intended to be fastened to the sound damping device. The suspension system also comprises a fitting device 1 intended to be attached horizontally to the vehicle's chassis. The fitting device comprises two members 13, 14 intended to be situated opposite and parallel to one another and is itself intended to accommodate the arms 2, the insulators 4 fastened to the arms and the sound damping device 5 fastened to the insulators 4. The arms 2 are intended to be parallel and be horizontally attached detachably close to the members 13, 14.

The arms 2 comprise abutment means 21, 22 intended to cooperate with corresponding abutment means 11, 12 on the fitting device 1. As illustrated in Figures 1 and 2, the abutment means of the arms comprise a protruding conical portion 21 at one end of the arm and a protruding right-angled shoulder 22 at the other end of the arm, and the abutment means of the fitting device comprise two conical recesses 11 and two horizontal portions 12. The fitting device 1 may also take the form of a U-shaped frame in which the members 13, 14 serve as side members linked by a cross-member 15. The two conical recesses 11 on the fitting device, one for each arm, are situated in the cross-member 15 near to the members 13, 14. The two horizontal portions 12 of the fitting device are situated at the respective ends of the members 13, 14 furthest away from the cross-member 15.

Alternatively, the abutment means protruding from the arms 2 may comprise teeth, a cylinder or some other shape, in which case the recesses on the fitting device 1 will be shaped accordingly. The recesses might also instead be situated in the fitting device and the protruding portion in the arm.

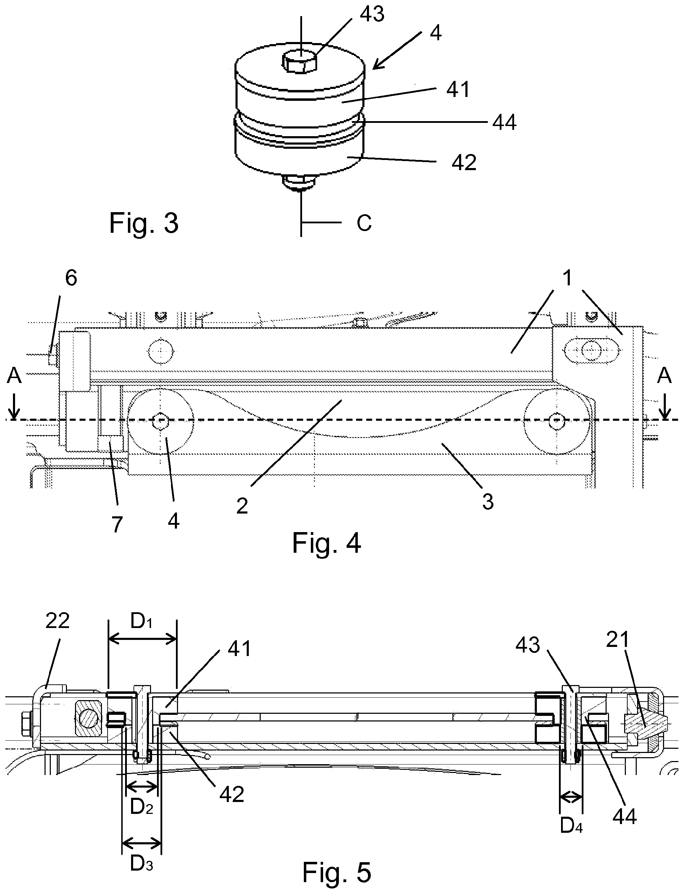

As depicted in Figure 3, the insulators 4 each have an upper and a lower damping cushion 41, 42 preferably of circular cylindrical shape with a first diameter D₁, and an intermediate element 44 with a second diameter D₂, which cushions 41, 42 and intermediate element 44 are joined together by the rod 43 which has, when fitted, a centreline C running vertically. The insulators 4 are each intended to be fitted by means of their rods 43 in respective fitting apertures 23 on the arms 2, as may be seen in Figure 2.

The damping cushions 41, 42 of the insulators 4 are uniform cylinders made of elastic material. This elastic material may comprise metal wires, rubber or plastic or other heat-tolerant material.

Said fitting apertures 31 may be in two protruding right-angled flanges 3 situated close to the upper side of the sound damping device.

Figure 4 is a view from above of the arm 2 together with insulators 4 and the flange 3 fitted to one of the members 13 of the fitting device 1. Fastening bolts 6 and 7 are also depicted. The broken line denotes a section A-A in the longitudinal direction of the arm 2 and through the centre of the insulators 4.

The diameter D₃ of the fitting apertures 31 is smaller than the diameter D₁ of the cushions 41, 42 but larger than the diameter D₂ of the intermediate element 44. The diameters of the damping cushions and the fitting aperture are indicated in Figure 5, which depicts a section along A-A in Figure 4. Figure 5 also depicts the diameter D₄ of the arm apertures 23.

The fitting device 1 and the arms 2 comprise a number of apertures 16, 17, 26, 27 intended to accommodate bolts 6, 7 for fastening the fitting device and the arms to one another. These apertures and bolts are most clearly depicted in Figures 1, 2 and 4.

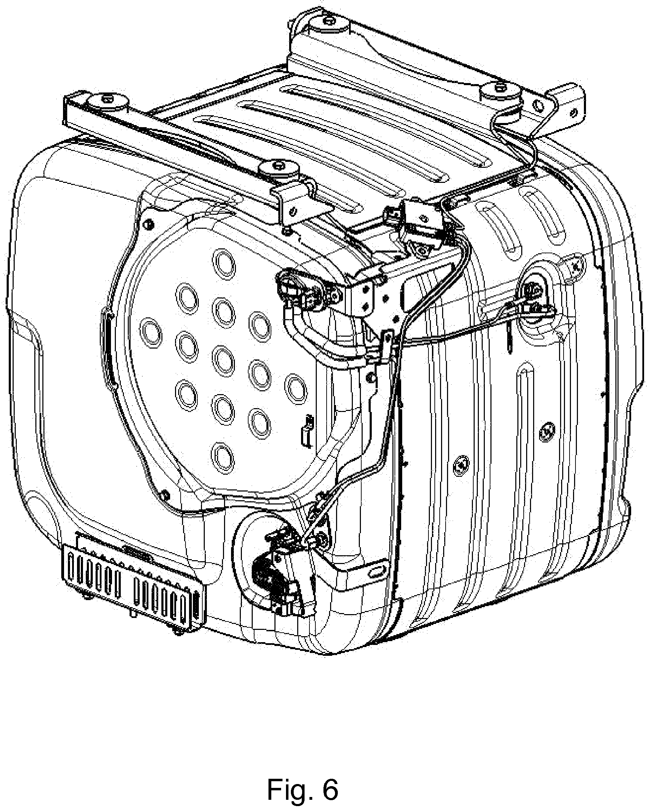

Fitting the sound damping device and the suspension system involves the insulators being fastened to the arms 2 and the sound damping device 5 via respective fitting apertures 23, 31. When the arms 2 and the insulators 4 have been pre-fitted to it as illustrated in Figure 6, the sound damping device may be suspended on the fitting device 1 in such a way that the abutment means 21, 22 of the arms abut against the abutment means 11, 12 of the fitting device. All that is then required is that the bolts 6 and 7 be screwed firmly into the respective apertures 16, 17, 26, 27 of the fitting device and the arms.

Removing the suspension system involves unscrewing the bolts 6 and 7, whereupon the sound damping device 5 can, together with the suspension system parts (arms and insulators) fastened to it, be released from the fitting device 1. The movement of the suspension system required to release it will correspond to the length of the protruding abutment means 21, which is of the order of 10 to 30 mm, preferably 15 mm.

In a preferred embodiment, the suspension system comprises four fitting apertures 31 situated close to the upper side of the sound damping device and four insulators 4 intended to be fitted in them.

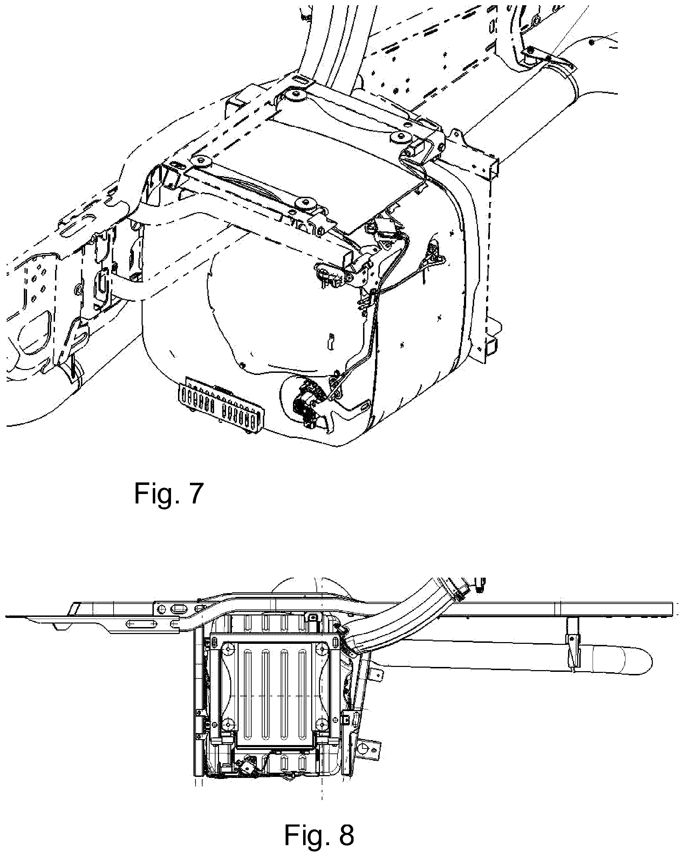

Figure 6 depicts the suspension system pre-fitted to the sound damping device before being subsequently fitted on the fitting device pertaining to the vehicle. The fitting device is fastened to the underside of the vehicle's chassis, as illustrated in Figure 7. Figure 8 also depicts the suspension system and the sound damping device when fitted under a vehicle, as seen from above. The sound damping device is situated close to the edge of the chassis, thereby simplifying both fitting and removal.

Fitting the sound damping device to the vehicle involves the suspension system being aligned so that the preferably conical protruding portions 21 are inserted in corresponding conical recesses 11, and the protruding right-angled shoulders 22 abut against the horizontal portions 12. The sound damping device together with the suspension system will thus be in correct position in a state of rest without the bolts 6, 7 having been used. The arms 2 are then locked firmly to the fitting device 1 by means of the bolts 6, 7 so that the sound damping device is firmly secured.

The present suspension system is not confined to being used to suspend a sound damping device, as it may also be used to suspend an engine, gearbox or the like.

The present invention is not restricted to the preferred embodiments described above. Sundry alternatives, modifications and equivalents may be used. The above embodiments are therefore not to be regarded as limiting the invention's protective scope which is defined by the attached claims.

## Claims

1. A suspension system for a sound damping device (5) pertaining to a vehicle, comprising two arms (2), **characterised in that** the system comprises
- at least two fitting apertures (31) situated close to the upper side of the sound damping device,
- at least two insulators (4) intended to be fitted in said fitting apertures (31) and on said arms (2), each insulator comprising a rod (43) and the insulators being intended to be fastened to the sound damping device,
- a fitting device (1) intended to be attached horizontally to the vehicle's chassis and comprising two members (13, 14) intended to be situated opposite and parallel to one another, which fitting device is intended to accommodate the arms (2), the insulators (4) fastened to the arms and the sound damping device (5) fastened to the insulators (4), and
- which arms (2) are intended to be parallel and be horizontally attached detachably close to the members (13, 14).

2. A suspension system according to claim 1, **characterised in that** the arms (2) comprise abutment means (21, 22) intended to cooperate with corresponding abutment means (11, 12) on the fitting device (1).

3. A suspension system according to any one of the foregoing claims, **characterised in that** the abutment means (21, 22) of the arms comprise a protruding conical portion (21) at one end of the arm and a protruding right-angled shoulder (22) at the other end of each arm, and that the abutment means (11, 12) of the fitting device comprise two conical recesses (11) and two horizontal portions (12).

4. A suspension system according to claim 1, **characterised in that** the insulators (4) comprise an upper and a lower damping cushion (41, 42) with a first diameter (D₁) and an intermediate element (44) with a second diameter (D₂), which cushions (41, 42) and intermediate element (44) are joined together by the rod (43) which is intended to be fitted with a vertical centreline (C).

5. A suspension system according to claim 1 or 4, **characterised in that** the rods (43) of the respective insulators (4) are intended to be fitted in fitting apertures (23) on the arms (2).

6. A suspension system according to any one of claims 1, 4 and 5, **characterised in that** the damping cushions (41, 44) of the insulators (4) are uniform cylinders made of elastic material.

7. A suspension system according to claim 6, **characterised in that** the damping cushions (41, 42) comprise metal wires.

8. A suspension system according to claim 4, **characterised in that** the diameter (D₃) of said fitting apertures (31) is smaller than the diameter (D₁) of the cushions (41, 42) but larger than the diameter (D₂) of the intermediate element (44).

9. A suspension system according to either of claims 1 and 8, **characterised in that** said fitting apertures (31) are situated in two protruding right-angled flanges (3) on the upper side of the sound damping device.

10. A suspension system according to any one of the foregoing claims, **characterised in that** the fitting device (1) comprises a cross-member (15) which joins together the two members (13, 14).

11. A suspension system according to any one of the foregoing claims, **characterised in that** the fitting device (1) and the arms (2) comprise a number of apertures (16, 17, 26, 27) intended to accommodate bolts (6, 7) which are themselves intended to fasten the fitting device (1) and the arms (2) to one another.

12. A suspension system according to any one of the foregoing claims, **characterised in that** the system comprises four fitting apertures (31) situated close to the upper side of the sound damping device, and four insulators (4) intended to be fitted in said fitting apertures (31).

13. A vehicle **characterised in that** it is provided with a suspension system according to any one of claims 1 to 12.

## Patentansprüche

1. Aufhängungssystem für eine Schalldämpfungsvorrichtung (5) eines Fahrzeugs, das zwei Arme (2) aufweist, **dadurch gekennzeichnet, dass** das System aufweist
- mindestens zwei Einbauöffnungen (31), die sich nahe der Oberseite der Schalldämpfungsvorrichtung befinden,
- mindestens zwei Isolierkörper (4), die zum Einsetzen in die Einbauöffnungen (31) und zum Anbringen an den Armen (2) vorgesehen sind, wobei jeder Isolierkörper eine Stange (43) aufweist und die Isolierkörper an der Schalldämpfungsvorrichtung zu befestigen sind,
- eine Anbauvorrichtung (1), die für den waagrechten Anbau am Fahrgestell des vorgesehen ist und zwei Elemente (13, 14) aufweist, die einander gegenüber und parallel zueinander anzuordnen sind, wobei die Anbauvorrichtung die Arme (2), die an den Armen befestigten Isolierkörper (4) und die an den Isolierkörpern (4) befestigte Schalldämpfungsvorrichtung (5) aufnehmen soll, und
- wobei die Arme (2) parallel und waagrecht nahe an den Elementen (13, 14) abbaubar anzubringen sind.

2. Aufhängungssystem nach Anspruch 1, **dadurch gekennzeichnet, dass** die Arme (2) Anschlagmittel (21, 22) aufweisen, die zum Zusammenwirken mit entsprechenden Anschlagmitteln (11, 12) vorgesehen sind.

3. Aufhängungssystem nach Anspruch 1, **dadurch gekennzeichnet, dass** die Anschlagmittel (21, 22) der Arme einen hervorstehenden konischen Abschnitt (21) an einem Ende des Arms und eine hervorstehende rechtwinklige Schulter (22) am anderen Ende jedes Arms aufweisen, und dass die Anschlagmittel (11, 12) der Anbauvorrichtung zwei konische Vertiefungen (11) und zwei waagrechte Abschnitte (12) aufweisen.

4. Aufhängungssystem nach Anspruch 1, **dadurch gekennzeichnet, dass** die Isolierkörper (4) ein oberes und ein unteres Dämpfungskissen (41, 42) mit einem ersten Durchmesser (D₁) und ein Zwischenelement (44) mit einem zweiten Durchmesser (D₂) aufweisen, wobei die Kissen (41, 41) und das Zwischenelement (44) miteinander durch den Stab (43) verbunden sind, der entlang einer senkrechten Mittellinie (C) einzusetzen ist.

5. Aufhängungssystem nach Anspruch 1, **dadurch gekennzeichnet, dass** die Stäbe (43) der jeweiligen Isolierkörper (4) in die Einbauöffnungen (31) der Arme (2) einzuführen sind.

6. Aufhängungssystem nach einem der Ansprüche 1, 4 und 5, **dadurch gekennzeichnet, dass** die Dämpfungskissen (41, 42) der Isolierkörper (4) gleichförmige Zylinder sind, die aus einem elastischen Material bestehen.

7. Aufhängungssystem nach Anspruch 6, **dadurch gekennzeichnet, dass** die Dämpfungskissen (41, 42) Metalldrähte aufweisen.

8. Aufhängungssystem nach Anspruch 4, **dadurch gekennzeichnet, dass** der Durchmesser (D₃) der Einbauöffnungen (31) kleiner ist als der Durchmesser (D₁) der Dämpfungskissen (41, 42), aber größer als der Durchmesser (D₂) des Zwischenelements (44).

9. Aufhängungssystem nach einem der Ansprüche 1 bis 8, **dadurch gekennzeichnet, dass** sich die Einbauöffnungen (31) in zwei hervorstehenden rechtwinkligen Flanschen (3) auf der Oberseite der Schalldämpfungsvorrichtung befinden.

10. Aufhängungssystem nach einem der vorigen Ansprüche, **dadurch gekennzeichnet, dass** die Anbauvorrichtung (1) ein Querelement (15) aufweist, das die zwei Elemente (13, 14) miteinander verbindet.

11. Aufhängungssystem nach einem der vorigen Ansprüche, **dadurch gekennzeichnet, dass** die Anbauvorrichtung (1) und die Arme (2) eine Anzahl Öffnungen (16, 17, 26, 27) aufweisen, die zur Aufnahme von Schrauben (6, 7) vorgesehen sind, die ihrerseits zur Befestigung der der Anbauvorrichtung (1) und der Arme (2) aneinander vorgesehen sind.

12. Aufhängungssystem nach einem der vorigen Ansprüche, **dadurch gekennzeichnet, dass** das System vier Einbauöffnungen (31) aufweist, die sich nahe der Oberseite der Schalldämpfungsvorrichtung befinden, und vier Isolierkörper (4), die in die Einbauöffnungen (31) einzubauen sind.

13. Fahrzeug, **dadurch gekennzeichnet, dass** es mit einem Aufhängungssystem nach einem der Ansprüche 1 bis 12 ausgerüstet ist.

## Revendications

1. Système de suspension pour un dispositif d'insonorisation (5) appartenant à un véhicule, comprenant deux bras (2), **caractérisé en ce que** le système comprend :
- au moins deux ouvertures de montage (31) situées à proximité du côté supérieur du dispositif d'insonorisation,
- au moins deux isolants (4) destinés à être montés dans lesdites ouvertures de montage (31) et sur lesdits bras (2), chaque isolant comprenant une tige (43) et les isolants étant destinés à être fixés au dispositif d'insonorisation,
- un dispositif de montage (1) destiné à être fixé horizontalement au châssis du véhicule et comprenant deux éléments (13, 14) destinés à être situés à l'opposé et parallèles l'un à l'autre, lequel dispositif de montage est destiné à contenir les bras (2), les isolants (4) fixés aux bras et le dispositif d'insonorisation (5) fixé aux isolants (4), et
- lesquels bras (4) étant destinés à être parallèles et fixés horizontalement et de façon amovible à proximité des éléments (13, 14).

2. Système de suspension selon la revendication 1, **caractérisé en ce que** les bras (2) comprennent des moyens de butée (21, 22) destinés à coopérer avec des moyens de butée (11, 12) correspondants sur le dispositif de montage (1).

3. Système de suspension selon l'une quelconque des revendications précédentes, **caractérisé en ce que** les moyens de butée (21, 22) des bras comprennent une partie conique saillante (21) à une extrémité du bras et un épaulement saillant (22) à angle droit à l'autre extrémité de chaque bras, et **en ce que** les moyens de butée (11, 12) du dispositif de montage comprennent deux renfoncements coniques (11) et deux parties horizontales (12).

4. Système de suspension selon la revendication 1, **caractérisé en ce que** les isolants (4) comprennent un coussin d'amortissement supérieur et inférieur (41, 42) ayant un premier diamètre (D₁) et un élément intermédiaire (44) ayant un second diamètre (D₂), lesquels coussins (41, 42) et élément intermédiaire (44) sont reliés entre eux par la tige (43) qui est destinée à être montée avec un axe vertical (C).

5. Système de suspension selon la revendication 1 ou 4, **caractérisé en ce que** les tiges (43) des isolants respectifs sont destinées à être montées dans des ouvertures de montage (23) sur les bras (2).

6. Système de suspension selon l'une quelconque des revendications 1, 4 et 5, **caractérisé en ce que** les coussins d'amortissement (41, 44) des isolants (4) sont des cylindres uniformes en matériau élastique.

7. Système de suspension selon la revendication 6, **caractérisé en ce que** les coussins d'amortissement (41, 42) comprennent des fils métalliques.

8. Système de suspension selon la revendication 4, **caractérisé en ce que** le diamètre (D₃) desdites ouvertures de montage (31) est plus petit que le diamètre (D₁) des coussins (41, 42) mais plus grand que le diamètre (D₂) de l'élément intermédiaire (44).

9. Système de suspension selon l'une ou l'autre des revendications 1 et 8, **caractérisé en ce que** lesdites ouvertures de montage (31) sont situées dans deux brides saillantes (3) à angle droit sur le côté supérieur du dispositif d'insonorisation.

10. Système de suspension selon l'une quelconque des revendications précédentes, **caractérisé en ce que** le dispositif de montage (1) comprend une traverse (15) qui relie entre eux les deux éléments (13, 14).

11. Système de suspension selon l'une quelconque des revendications précédentes, **caractérisé en ce que** le dispositif de montage (1) et les bras (2) comprennent un nombre d'ouvertures (16, 17, 26, 27) destinées à contenir des boulons (6, 7) qui sont eux-mêmes destinés à fixer entre eux le dispositif de montage (1) et les bras (2).

12. Système de suspension selon l'une quelconque des revendications précédentes, **caractérisé en ce que** le système comprend quatre ouvertures de montage (31) situées à proximité du côté supérieur du dispositif d'insonorisation, et quatre isolants (4) destinés à être montés dans lesdites ouvertures de montage (31).

13. Véhicule **caractérisé en ce qu'**il est pourvu d'un système de suspension selon l'une quelconque des revendications 1 à 12.
